# EUROPEAN PATENT APPLICATION

(11) **EP 1 521 183 A2**
(43) Date of publication of application: **06.04.2005**
(21) Application number: 04019309.6
(22) Date of filing: 13.08.2004
(51) Int. Cl.: G06F 17/30

(54) **Wireless media player**

(30) Priority: 30.09.2003 US 675655
(71) Applicant: Broadcom Corporation, Irvine, California 92618-7013 (US)
(72) Inventor: Unger, Kenneth, Surrey British Columbia V3S 8Y8 (CA); Houghton, Phil, Surrey, B.C. V3S 8X5 (CA); Rambo, Darwin, Surrey, B.C. V3S 7P3 (CA)
(74) Representative: Jehle, Volker Armin, Dipl.-Ing.

(57) **Abstract**

A system and a method for wireless playing media files utilizing a central server, in which a database of media files is stored, is described. The system includes a base-station connected to the server, a set of media clients that can be placed in different locations within the service area of the base-stations. The media clients can wirelessly connect to the server via the base-station to access the media files database and download media files, decode and play the media files. The media clients can be connected to devices capable of outputting the media files decoded and played by the media clients. The media clients can be also incorporated into mobile devices and cars, such that a user can download media files from the server and be able to display them at a location remote from the server and the service area of the base-station.

## Description

### RELATED APPLICATIONS

[Not Applicable]

### FEDERALLY SPONSORED RESEARCH OR DEVELOPMENT

[Not Applicable]

### [MICROFICHE/COPYRIGHT REFERENCE]

[Not Applicable]

### BACKGROUND OF THE INVENTION

Media players are becoming more popular and personalized with the advancement of technology. Most media players are designed to interpret media files such as, for example, video and audio files. Media players such as stereo systems capable of playing compact discs (CDs) and tapes, and video systems such as videocassette recorders (VCRs) and digital versatile disc (DVD) players, have become very popular in households. Advancements made it possible for most personal computers (PCs) to interpret media files that are digitally encoded such as, for example, video and audio files. Standards such as the moving picture experts group (MPEG) made it possible to digitize and compress video files. Audio standards such as, for example, the moving picture expert group layer-3 audio (MP3) made it possible to digitize and compress music files. Most PCs and media players, readily available on software platforms, are capable of decoding MP3- and MPEG-compressed files, in addition to other formats. The desire for portable media players brought about such products as CD players, tape players, and MP3 players, onto which an album or albums may be downloaded from a PC and played anywhere on any speaker device. Some automobile makers are also incorporating such media players into their automobiles, including DVD players.

Many users may have substantial music collections stored on CDs or on a PC's hard drive. However, users are increasingly interested in listening to their music in multiple places. This is especially true in a home environment, where it may be desired to listen to music in many rooms by several people simultaneously. Each person may desire to have access to their favorite music or video collection, and possibly other people's collections, from any room of the house equipped properly to play music or videos. Household individuals may also want to take some of their favorite music with them when they leave the house.

Current technology has attempted to address some of these issues utilizing such devices as mentioned hereinabove, i.e. portable media players. Multiple CD players allow users to play music in any room, however, that would require duplicating or moving CDs to make the desired music collection accessible. MP3 players allow multiple albums to be stored on a single CD or a hard drive, but there is still a limit on the amount of music accessed, and any collection can only be played in one room at any time. Accordingly, despite these solutions for mobility, none of the existing devices provide an easy access to a central music or video collection.
According to another aspect of the invention, a system for wirelessly playing media files, the system comprises:
a central server having a memory for storing the media files;
a station connected to the central server;
at least one client, the client capable of accessing and downloading the media files by wirelessly communicating with the server via the station from a plurality of remote locations from the station and the server; and
a plurality of devices capable of outputting the media files, wherein the client connects to the devices.
Advantageously, the client comprises:
a wireless transceiver;
a processing unit running an operating system;
a display; and
a decoder that decodes the downloaded media files.
Advantageously, the client further comprises a player that plays the decoded media files.
Advantageously, the client outputs the media file in analog format to a device capable of outputting analog media files.
Advantageously, the client outputs the media file in digital format to a device capable of outputting digital media files.
Advantageously, the client is capable of accessing, downloading and decoding portions of a media file.
Advantageously, the client accesses and downloads the next portion of the media file while playing the previously downloaded and decoded portion of the media file.
Advantageously, the client is battery-operated.
Advantageously, the client utilizes a charging cradle plugged into a power source.
Advantageously, the client is built within a mobile device.
Advantageously, the mobile device includes a memory where downloaded media files are stored.
Advantageously, the client is in a car.
Advantageously, the car includes a memory where downloaded media files are stored.
Advantageously, the client is capable of automatically accessing and downloading the media files on the server when the car is within communicating distance from the station.
Advantageously, the server is connected to the Internet.
Advantageously, the client is capable of accessing, downloading, decoding, and playing streaming data from the Internet.
Advantageously, the system comprises at least a second server.
Advantageously, the system comprises at least a second station.
Advantageously, the system comprises at least a second client.
According to another aspect of the invention, a method for wirelessly playing media files in a system comprising a server where media files reside, a station connected to the server, and at least one client capable of accessing and downloading the media files, the client further wirelessly connected to the server via the station, the client having a transceiver, an operating system, a display, and a media files decoder, the method comprises:
accessing and downloading a media file from the server, by the client wirelessly via the station;
decoding the downloaded media file;
playing the decoded media file utilizing a player on the client; and
connecting the client output to an input of a device capable of outputting the media file.
Advantageously, accessing and downloading the media file comprises accessing and downloading portions of the media file.
Advantageously, the method further comprises:
decoding the downloaded portion of the media file;
playing the decoded portion of the media file; and
accessing and downloading a next portion of the media file while the previous portions is being decoded and played.
Advantageously, the client is built in a mobile device.
Advantageously, the mobile device comprises a memory for storing downloaded media files.
Advantageously, the client is in a car, the car having a memory for saving downloaded media files.
Advantageously, the method further comprises:
automatically accessing the media files on the server by the client in the car, when the car comes inside the area covered by the wireless network of the station;
comparing the media files stored in the memory of the server with a list of media files stored in the memory in the car;
downloading any media files in the server that are not in the memory in the car, if the memory in the car has sufficient storage space; and
removing media files in the memory in the car, then downloading media files in the server that are not in the memory in the car, if the memory in the car does not have sufficient storage space for more media files.
Advantageously, the server is connected to the Internet.
Advantageously, the method further comprises:
accessing the Internet by the client, through the server and via the station; and
accessing media files from the Internet as a digital bit-stream.

Further limitations and disadvantages of conventional and traditional approaches will become apparent to one of ordinary skill in the art through comparison of such systems with the present invention as set forth in the remainder of the present application with reference to the drawings.

### BRIEF SUMMARY OF THE INVENTION

Aspects of the present invention may be seen in a method for wirelessly playing media files in a system comprising a central server having a memory for storing the media files; a station connected to the central server; at least one client, the client capable of accessing and downloading the media files by wirelessly communicating with the server via the station from a plurality of remote locations from the station and the server; and a plurality of devices capable of outputting the media files, wherein the client connects to the devices.

The client comprises a wireless transceiver; a processing unit running an operating system; a display; and a decoder that decodes the downloaded media files.

The method for wirelessly playing media files in the system comprises accessing and downloading a media file from the server, by the client wirelessly via the station; decoding the downloaded media file; playing the decoded media file utilizing a player on the client; and connecting the client output to an input of a device capable of outputting the media file.

In an embodiment of the present invention the client is in a car, where the method for playing media files further comprises automatically accessing the media files on the server by the client in the car, when the car comes inside the area covered by the wireless network of the station; comparing the media files stored in the memory of the server with a list of media files stored in the memory in the car; downloading any media files in the server that are not in the memory in the car, if the memory in the car has sufficient storage space; and removing media files in the memory in the car, then downloading media files in the server that are not in the memory in the car, if the memory in the car does not have sufficient storage space for more media files.

These and other features and advantages of the present invention may be appreciated from a review of the following detailed description of the present invention, along with the accompanying figures in which like reference numerals refer to like parts throughout.

### BRIEF DESCRIPTION OF SEVERAL VIEWS OF THE DRAWINGS

Fig. 1 illustrates an exemplary system wireless media player system in a home, in accordance with an embodiment of the present invention.

Fig. 2 illustrates an exemplary media client, in accordance with an embodiment of the present invention.

Fig. 3 illustrates an exemplary media client, in accordance with an embodiment of the present invention.

### DETAILED DESCRIPTION OF THE INVENTION

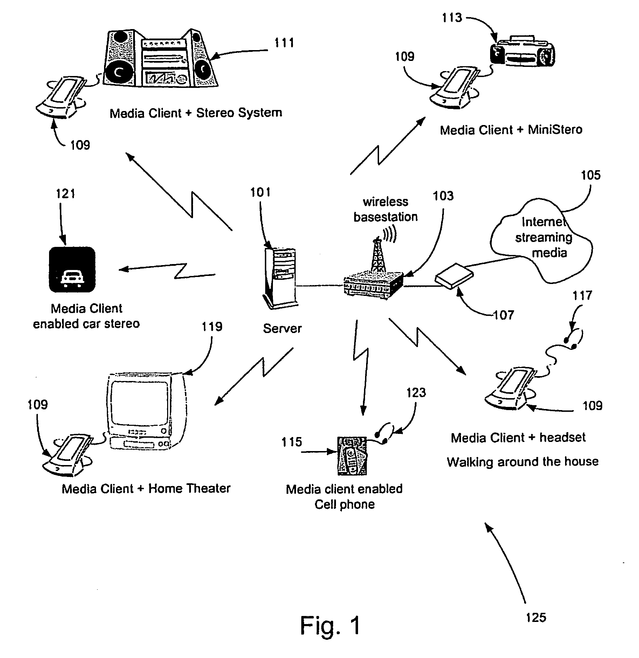

Fig. 1 illustrates an exemplary wireless media player system 125 in a home, in accordance with an embodiment of the present invention. The wireless media player system 125 comprises a server 101 where all the media files reside, a wireless base-station 103 connected to the server 101, and media clients 109 capable of wirelessly communicating with the server 101 via the wireless base-station 103.

In an embodiment of the present invention, the server 101 may be a PC or a laptop computer with memory, on which media files may be stored or downloaded. A user may play the media files directly from the server 101 by connecting it to an appropriate output device. For example, music stored in a compressed format such as, for example, MP3 format may be played directly on the server 101 when connected to a speaker device such as, speakers or headphones. The server 101 may also be connected to a display screen, such as a computer monitor, which enables displaying video media files such as, for example, MPEG-2 files or DVDs.

The server 101 may be connected to a base-station 103, which may be compliant with a wireless standard such as, for example, the IEEE 802.11 standard(s) for wireless local area networks (LANs). The base-station 103 may be utilized to set up a wireless network within an area such as, for example, a house, where users may want to play media files such as the ones stored on the server 101, in different locations, i.e. different rooms around the house. The media clients 109 should also be compliant with the wireless standard of the base-station 103. A wireless standard such as the IEEE 802.11 standard(s) for wireless LANs provides a coverage area of nearly 1000 feet, which may be suitable for most homes. In one embodiment of the present invention, utilizing a standard such as the IEEE 802.11 standard(s) for wireless LANs, may provide the network with the capability to decode up to 54 mbps, which is sufficient for decoding a video bit-stream.

The system, in one embodiment of the present invention, may utilize more than one base-station 103 depending on the size of the desired service area. The system, in one embodiment of the present invention, may utilize more than one server 101 to provide a larger media files database.

In one embodiment of the present invention, each room of the house, in which the server 101 resides, may contain a device or devices capable of outputting media associated with media files such as the ones stored on the server 101. These devices may be capable of playing audio through a speaker device or playing video on a display screen. A media client 109 may be connected to the device in a room, and a user may access the media files residing in the server 101 to play on the device. In one embodiment of the present invention, a media client 109 may be connected to a stereo system 111 in one room, where a user may utilize the media client 109 to select music files to play on the stereo system 111. In a different room, the media client 109 may be connected to another stereo system, that may be a small stereo unit 113, which may be capable of playing music files accessed by the media client 109 from the server 101. The media client 109 may be also connected to a video display device such as a television 119, where the media client 109 may access video files from the server 101 to display on the screen of the television 119. A user, in one embodiment of the present invention, may utilize a media client 109 as a mobile media player by connecting it to a set of headphones 117 and accessing music files from the server 101, and playing the music files while moving about the house. In one embodiment of the present invention, the media client 109 may be incorporated into a mobile device such as a mobile phone 115, which may be connected to a media output device such as, for example, a set of headphones 123. The media client 109, in an embodiment of the present invention, may be incorporated in a car stereo system 121, which may access the media files residing on the server 101, either based on user input or automatically, while in the proximity of the wireless network controlled by the base-station 103.

In one embodiment of the present invention, the server 101 may be connected to the Internet via a broadband Internet connection through a modem 107 such as, for example, a digital subscriber line (DSL) or a cable modem connection. The server 101 may be capable of playing Internet streaming media data 105 directly from the Internet. In this embodiment, the media clients 109 may be capable of accessing the streaming media data 105 through the wireless network via the base-station 103, which may be connected to the modem 107. The media clients 109 may access the streaming media data 105 and play it on the appropriate output device. The streaming media data 105 comprise music files, which may be output on a stereo system 111, a mini stereo system 113, or a headset 117 connected to a media client 109. The streaming media data 105 may also be output onto a headset 123 connected to a mobile device such as a cell phone 115 that may have a media client incorporated within it. The streaming media data 105 may comprise video data, which may be output to a video output device such as a television 119 connected to a media client 109.

The media client 109 may also be capable of playing other media files such as, for example, other audio formats like wav files or midi files. The media client 109 may also be capable for playing other video file formats such as, for example, digital video compression format based on MPEG-4 (DivX).

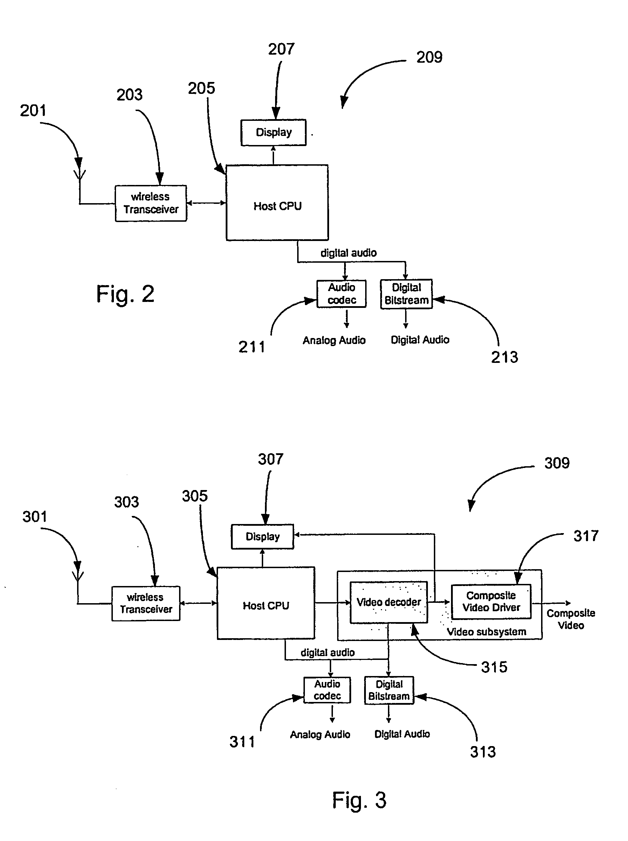

**Fig. 2** illustrates an exemplary media client 209, in accordance with an embodiment of the present invention. In one embodiment of the present invention, the media client 209 may be capable of retrieving and playing audio media files. The media client 209 may comprise an antenna 201, which may be capable of receiving and sending wireless signals. The media client 209 may also comprise a wireless transceiver 203 for controlling the process of transmitting and receiving wireless signals. The media client 209 may receive signals from the base-station containing media files stored on the server and requested by the media client 209. The media client 209 may also transmit signals containing commands to retrieve the desired media files. The wireless transceiver 203 may be compliant with a wireless standard such as, for example, the IEEE 802.11 standard(s) for wireless LANs. The wireless standard utilized by the wireless transceiver 203 may be consistent with the wireless standard utilized by the base-station of the wireless network.

In one embodiment of the present invention, the media client 209 may comprise a central processing unit (CPU) 205, which may run an operating system (OS) compliant with the media files of interest. In an embodiment of the present invention, the media client 209 may retrieve audio media files such as MP3 files. An OS, such as Windows may allow utilizing a third party media player such as, for example, Windows media player to output the media files retrieved. The media client 209 may comprise a chip capable of running the OS and also capable of running a decoder to decode the audio media files such as a MP3 decoder. In one embodiment of the present invention, the media client 209 may utilize a chip capable of supporting a graphics-based application, running an MP3 decoder, and running the OS.

In one embodiment of the present invention, the media client 209 may run an OS such as Windows CE, which may provide a graphical user interface (GUI) and may run an application such as the jukebox software or any media player supported by the OS, which may provide an easy interface for the user. Utilizing an application such as the jukebox software may provide MP3 decoding, which may require utilizing a processor capable of supporting MP3 decoding in real-time. Utilizing an OS such as Windows CE may also provide protocols necessary for communicating over the wireless network, protocols such as transmission control protocol/intemet protocol (TCP/IP).

The media client 209 may have a display 207. In one embodiment of the present invention, the display 207 may be a liquid crystal display (LCD) similar to those 2.5 inch LCDs used with video recording devices or advanced palm pilots. The display 207 may run the Windows media player in a smaller version, but similar to the Windows media player on a PC. The display 207 may also be capable of displaying menus and allowing a user of the media client 209 to browse through the network for the desired music files residing on the server. In one embodiment of the present invention, the display 207 of the media client 209 may allow a user to browse through several servers, if more than one is associated with the network. A display 207 such as a LCD may allow a user to scroll through album titles and songs.

In one embodiment of the present invention, the display 207 of the media client 209 may be a smaller in-line screen such as, for example, the in-line cylindrical screens used in some MP3 players. The display 207 in such an embodiment may display basic information regarding the file being played.

In one embodiment of the present invention, the media client 209 may access and decode a MP3 file, which is music in digital format, using the MP3 decoder. The media client 209 may then utilize an audio codec 211 (digital-to-analog or D/A converter) to convert the decoded MP3 file to analog format, which may be played on any analog audio output device such as, for example, a stereo speaker or a headset. In an embodiment of the present invention, the media client 209 may send the decoded MP3 file as a digital bit stream 213 through a digital audio output connected to an output device that may support digital audio inputs such as, for example, a DVD player or a stereo system.

In one embodiment of the present invention, the media client 209 may access streaming data from the Internet, if the central server is connected to the Internet. The display 207 of the media client 209 may be utilized to browse the Internet and access uniform resource locators (URLs) where streaming media data may be available. The streaming media data may then be decoded and played as described herein.

In one embodiment of the present invention, the media client 209 may access and play portions of media files instead of retrieving an entire media file all at once. The media client 209 may access a portion of a media file, and while the CPU 205 decodes and outputs the retrieved portion of the audio media file, the media client 209 may retrieve the next portion of the file. Accessing media files in portions may eliminate the need for large amounts of memory, beyond what may be required to run the software and the OS.

In one embodiment of the present invention, the media client 209 may also comprise a flash card interface, which may allow media files to be cached in the media client 209. In such an embodiment, a user may utilize the media client 209 to play media files by accessing the media files as a bit stream from the server and onto a media output device. The user may also access media files from the server and cache or store the media files in the media client 209 to use it as a personal player while out of the network. The media client 209 may provide configuration options to allow a user to choose the mode of operation of the media client 209.

**Fig. 3** illustrates an exemplary media client 309, in accordance with an embodiment of the present invention. In one embodiment of the present invention, the media client 309 may be capable of retrieving and playing music media files as well as video media files. The media client 309 may comprise an antenna 301, which may be capable of receiving and sending wireless signals. The media client 309 may also comprise a wireless transceiver 303 for controlling the process of transmitting and receiving wireless signals. The media client 309 may receive signals from the base-station containing media files stored on the server and requested by the media client 309. The media client 309 may also transmit signals containing commands to retrieve the desired media files. The wireless transceiver 303 may be compliant with a wireless standard such as, for example, the IEEE 802.11 standard(s) for wireless LANs. The wireless standard utilized by the wireless transceiver 303 may be consistent with the wireless standard utilized by the base-station of the wireless network.

In one embodiment of the present invention, the media client 309 may comprise a CPU 305, which may run an OS compliant with the media files of interest. In an embodiment of the present invention, the media client 309 may retrieve audio media files such as MP3 files, and video media files such as MPEG-2 files. An OS, such as Windows may allow utilizing a third party media player such as, for example, Windows media player to output the media files retrieved. The media client 309 may comprise a chip capable of running the OS and also capable of running a decoder to decode audio media files such as a MP3 decoder and a decoder to decode video media files. In one embodiment of the present invention, the media client 309 may utilize a chip capable of supporting a graphics-based application, running an MP3 decoder, controlling a video decoder, and running the OS.

In one embodiment of the present invention, the media client 309 may run an OS such as Windows CE, which may provide a graphical user interface (GUI) and may run an application such as the jukebox software or any media player supported by the OS, which may provide an easy interface for the user. Utilizing an application such as the jukebox software may provide MP3 decoding, which may require utilizing a processor capable of supporting MP3 decoding in real-time. Utilizing an OS such as Windows CE may also provide protocols necessary for communicating over the wireless network, protocols such as transmission control protocol/internet protocol (TCP/IP).

The media client 309 may have a display 307. In one embodiment of the present invention, the display 307 may be a LCD screen similar to those 2.5 inch LCDs used with video recording devices or advanced palm pilots. The display 307 may run the Windows media player in a smaller version, but similar to the Windows media player on a PC. The display 307 may also be capable of displaying menus and allowing a user of the media client 309 to browse through the network for the desired music and video files residing on the server. In one embodiment of the present invention, the display 307 of the media client 309 may allow a user to browse through several servers, if more than one is associated with the network. A display 307 such as a LCD may allow a user to scroll through videos, album titles, and songs.

In one embodiment of the present invention, the display 307 of the media client 309 may be a smaller in-line screen such as, for example, the in-line cylindrical screens used in some MP3 players. The display 307 in such an embodiment may display basic information regarding the file being played.

In one embodiment of the present invention, the media client 309 may access and decode a MP3 file, which is music in digital format, using the MP3 decoder. The media client 309 may then utilize an audio codec 311 (D/A converter) to convert the decoded MP3 file to analog format, which may be played on any analog audio output device such as, for example, a stereo speaker or a headset. In an embodiment of the present invention, the media client 309 may send the decoded MP3 file as a digital bit stream 313 through a digital audio output connected to an output device that may support digital audio inputs such as, for example, a DVD player.

In one embodiment of the present invention, the media client 309 may access a compressed video file, such as a MPEG-2 format file. The video decoder 315 may then decode the compressed video file, which may then go through a composite video drive 317. A composite video may be then output by the video drive 317 and displayed onto a video output device such as a television screen or a monitor. The audio associated with a video file may be sent through the same process as audio media files, as described herein.

In one embodiment of the present invention, the media client 309 may access streaming data from the Internet, if the central server is connected to the Internet. The display 307 of the media client 309 may be utilized to browse the internet and access URLs where streaming media data may be available. The streaming media data may then be decoded and played as described herein.

In one embodiment of the present invention, the media client 309 may access and play portions of media files instead of retrieving an entire media file all at once. The media client 309 may access a portion of a media file, and while the CPU 305 decodes the audio information and/or while the video decoder decodes the video information of the retrieved portion of the media file, the media client 309 may retrieve the next portion of the file. Accessing media files in portions may eliminate the need for large amounts of memory, beyond what may be required to run the software and the OS.

In one embodiment of the present invention, the media client 309 may also comprise a flash card interface, which may allow media files to be cached in the media client 309. In such an embodiment, a user may utilize the media client 309 to play media files by accessing the media files as a bit stream from the server and onto a media output device. The user may also access media files from the server and cache or store the media files in the media client 309 to use it as a personal player while out of the network. The media client 309 may provide configuration options to allow a user to choose the mode of operation of the media client 309.

In one embodiment of the present invention, the media client may require low power for operation. The media client may then be battery-operated, which may allow utilizing the media client in a mobile manner. In one embodiment of the present invention, the media client may sit in a charging cradle, which may be connected to an electric outlet.

In one embodiment of the present invention, the media client may be incorporated into other devices, such as an IP phone, for example. The media client may also be incorporated into a mobile device such as a mobile phone, which may be used to retrieve media files from the central server. When the user leaves the area covered by the wireless network such as, for example, the user's house, the user may be able to play the media files retrieved and downloaded onto the mobile device while traveling.

In one embodiment of the present invention, the media client may be utilized in a car. The media client may be connected to the car stereo system. In one embodiment of the present invention, the media client may also be connected to a video output device such as a screen if the car is equipped with one. The car system may utilize a storage device such as a hard drive, given the mobile nature of the car, to enable a user to retrieve media files from the server while inside the area covered by the wireless network, and play the media files later while the car is away. In one embodiment of the present invention, the media client in a car system may be equipped with a device to automatically synchronize with the server via the wireless network when the car is inside the area covered by the wireless network. In one embodiment of the present invention, the media client may compare the list of media files stored on the local storage device, e.g. the hard drive in the car, to the list of media files stored on the server. If the lists differ, the media client may then retrieve the media files that may be in the server but not in the local storage device. However, the local storage device may be already full of media files, in which case, the media client may be capable of determining whether to keep the current list of local media files, or replace one or more of the local media files with one or more of the new media files on the server.

In one embodiment of the present invention, the media client may be incorporated into the circuitry of a car, and may, as a result, operate utilizing the same source as all other devices in the car. In one embodiment of the present invention, the media client may be operated and charged by utilizing a car kit, which may be used to connect the media client to the car power source through a plug, such as a car cigarette lighter.

In one embodiment of the present invention, the user may set up on the server different directories for each of the rooms or locations at while a media client may be present. For example, the user may have a different list of music files for the car from the list of music files for the kitchen or living room. In one embodiment of the present invention, a media client may be capable of automatically retrieving media files associated with the location of the media client, from a directory residing in the server and containing the associated media files.

In one embodiment of the present invention, the system described herein, may be utilized for security purposes. Surveillance devices may be implemented around an area, such as around a house, and the devices may be connected to a server. A media client may access images of the video from any one of the surveillance devices, through the server, via a wireless network.

In one embodiment of the present invention, the data accessed and displayed by a media client may not be limited to media files. The media clients may be modified to allow the displaying of data, such as text messages, which may be sent to the main server and forwarded to the media client. The media clients may be also modified to allow simple data transfer such as text messaging between two media clients on the same network. In an embodiment of the present invention, voice messages, sent through the internet to the server, may also be accessible by the media clients.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A system for wirelessly playing media files, the system comprising:
a central server having a memory for storing the media files;
a station connected to the central server;
at least one client, the client capable of accessing and downloading the media files by wirelessly communicating with the server via the station from a plurality of remote locations from the station and the server; and
a plurality of devices capable of outputting the media files, wherein the client connects to the devices.

2. The system according to claim 1 wherein the client comprises:
a wireless transceiver;
a processing unit running an operating system;
a display; and
a decoder that decodes the downloaded media files.

3. The system according to claim 2 wherein the client further comprises a player that plays the decoded media files.

4. The system according to claim 3 wherein the client outputs the media file in analog format to a device capable of outputting analog media files.

5. The system according to claim 3 wherein the client outputs the media file in digital format to a device capable of outputting digital media files.

6. The system according to claim 2 wherein the client is capable of accessing, downloading and decoding portions of a media file.

7. The system according to claim 6 wherein the client accesses and downloads the next portion of the media file while playing the previously downloaded and decoded portion of the media file.

8. The system according to claim 2 wherein the client is battery-operated.

9. The system according to claim 2 wherein the client utilizes a charging cradle plugged into a power source.

10. A method for wirelessly playing media files in a system comprising a server where media files reside, a station connected to the server, and at least one client capable of accessing and downloading the media files, the client further wirelessly connected to the server via the station, the client having a transceiver, an operating system, a display, and a media files decoder, the method comprising:
accessing and downloading a media file from the server, by the client wirelessly via the station;
decoding the downloaded media file;
playing the decoded media file utilizing a player on the client; and
connecting the client output to an input of a device capable of outputting the media file.
